# EUROPEAN PATENT APPLICATION

(11) **EP 0 806 599 A1**
(43) Date of publication of application: **12.11.1997**
(21) Application number: 97103011.9
(22) Date of filing: 25.02.1997
(51) Int. Cl.: F16L 59/02

(54) **System for heat insulation**

(30) Priority: 07.05.1996 IT BA960023
(71) Applicant: Ture, Luigi, 74100 Taranto (IT)
(72) Inventor: Ture, Luigi, 74100 Taranto (IT)

(57) **Abstract**

Insulating coating for pipes consisting of a basis of fiber, like rock wool, fiberglass wool, ceramic fiber or any other material suitable for insulation and of a piece of cloth permeated with varnish. Said varnish can have any composition or, according to a preferential realization, a specific composition, as reported in Table 1. The insulating system, so realized, is characterized by high performances in thermal insulation and resistance to corrosion. The consequent coating results also featured with high elasticity, excellent anchorage properties and, moreover, is particularly resistant to high temperatures. That makes it suitable to applications requiring hard working conditions.

## Description

### Technical field

The present invention relates to a system of insulating coating for pipes consisting of a basis of fiber, like rock wool, fiberglass wool, ceramic fiber or any other material suitable to insulation and of a piece of cloth permeated with varnish. Said varnish can have any composition or, according to a preferential realization, a special one, as reported in Table 1.

The object of the present invention can be placed in field of coatings for pipelines of any kind. As known, such coatings consist of heat-insulating material like rock wool, fiberglass wool, ceramic fibers, cork and other similar ones which wrap the pipeline to be insulated and, in their turn, are covered by metal sheet (made of steel or aluminion).

The limit of the known applications is that, sometimes, high shims of insulating material are necessary to ensure the required heat insulation with remarkable increase of costs. Additionally, such materials are not suitable to protect pipes from other atmospheric agents, first of all, the corrosive action of the external atmosphere. Lastly, the presence of the metal sheet does not prevent the formation of condensation inside the coating.

### Disclosure of the invention

The invention is characterized by distinguished standard on the market thanks to his original composition that advantages lacking in the standard coating. The employment of a piece of cloth permeated with varnish instead of the traditional metal sheet prevents the formation of condensation inside the coating and improves the proofing. Further, the use of the special varnish - as claimed in the Italian patent for industrial invention n. 01243638 (dated 17/10/1990) - supplies said system with high heat-insulation performances, with high resistance to corrosion and to high temperatures.

The advantages of the invention are: high heat insulation, excellent resistance to ultraviolet radiations, remarkable life time without necessity of any treatment, favorable ecologycal impact; facility of application, good elasticity, capacity of following any profile of the basis of fiber without break, resistance to all atmospheric agents, absence of solvents, chemical resistance to alkaline solutions.

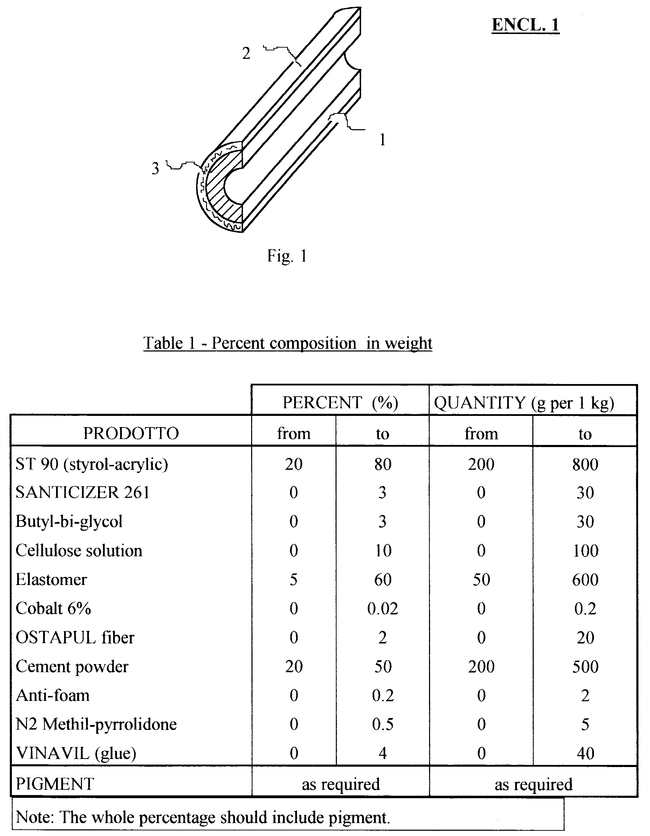

These and other advantages will be pointed out in the detailed description of the invention that will refer to Table 1, in which a composition of the varnish and an example of carrying out the invention (Fig. 1) are proposed. Both are examplifying and not restrictive.

### Way of carrying out the invention

The insulating coating system has been realized by means of a basis of fiber (1), as fiberglass wool, rock wool, ceramic fiber or other insulating material in the form of flocks, felt, cloth or rope and a piece (2), of cloth of natural or artficial fiber, wrapped on it. The thickness of the piece of cloth to wrap on the basic fiber, according to the not limitating example, ranges from 0.5 to 2 mm. Said piece of cloth is permeated with varnish (3) of any composition or, always according to a desired composition, of special composition as reported in Table 1, and as described and claimed in the Italian patent for industrial invention n. 01243638. The heat insulation system, according to a preferential but not limitative realization, takes the shape of a pipe, a segment of pipe or half-cylinder. It can be applied on whatever pipeline with a simple operation of pasting, preferably by means of mastic based on a distinctive dust of cement, as described and claimed in the European patent n. 05050542 (date of filing: 14/10/91). The varnish consisted of a binder or a carrier of any kind, in particular, resins among which polyurethanic, styrol-acrylic, epoxi-polyurethanic, epoxi-vinylic ones and other in a percentage ranging from 20% and 80%.

### Example

A practical realization of said heat insulation system is the following:
- application of the fiber basis on the material to be insulated (pipe, for example);
- temporary fixation of said insulating basis by means of metallic wires or adhesive;
- wrapping of the insulating basis by means the piece in cloth (for example, cloth of glass fiber);
- Final impregnation by means of a varnish, for example, elastomeric varnish.

## Claims

1. System for heat insulation of pipes and of flat or whatever shaped structures, having high performances in heat insulation, elasticity, proofing and resistance to corrosion, made of a basis of fiber, as rock wool, fiberglass wool, ceramic fiber or any other material suitable to insulation and characterized by the application of a piece in cloth of natural or artficial fiber wrapped on the fiber permeated with a varnish of any kind, said layer of cloth being able to substitute the known metal sheet.

2. System for heat insulation according to the claim 1 characterized by the fact that said piece of cloth is permeated with a special varnish, claimed in the Italian patent for industrial invention n. 01243638.

3. System for heat insulation according to the claim 1 characterized by the fact that the thickness of the piece to wrap on the fiber ranges from 0.5 to 2 mm.

4. System for heat insulation according to the claim 2 characterized by the fact that said varnish consists a binder or carrier of any kind, in particular, of resins among which the polyurethanic, the styrol-acrylic, the epoxi-polyurethanic, the epoxi-vinylic ones, and others in a percentage ranging from 20% and 80%.

5. System for heat insulation according to the claim 1 characterized by the maximum facility of application on any kind of material by means of simple operation of pasting.
